(19) Europäisches Patentamt
European Patent Office
Office européen des brevets

(11) Veröffentlichungsnummer: **0 269 833**
**A2**

(12) # EUROPÄISCHE PATENTANMELDUNG

(21) Anmeldenummer: 87115535.4

(22) Anmeldetag: 23.10.87

(51) Int. Cl.⁴: **C08L 83/10**, C08G 77/42, C08L 77/00

(30) Priorität: 05.11.86 DE 3637676
20.03.87 DE 3709238

(43) Veröffentlichungstag der Anmeldung: 08.06.88 Patentblatt 88/23

(84) Benannte Vertragsstaaten: CH DE FR GB IT LI NL

(71) Anmelder: **BAYER AG**
**Konzernverwaltung RP Patentabteilung**
**D-5090 Leverkusen 1 Bayerwerk(DE)**

(72) Erfinder: **Wittmann, Dieter Dr.**
**Doerperhofstrasse 15**
**D-4150 Krefeld(DE)**
Erfinder: **Westeppe, Uwe, Dr.**
**Yorckstrasse 19**
**D-5630 Remscheid 11(DE)**
Erfinder: **Schlak, Ottfried, Dr.**
**Kalkweg 2**
**D-5000 Koeln 80(DE)**
Erfinder: **Paul, Winfried, Dr. c/o Mobay Co.**
**Plastics and Rubber Division Building 8**
**Mobay Road Pittsburgh, PA 15205(US)**
Erfinder: **Brinkmeyer, Hermann, Dr.**
**Bodelschwinghstrasse 12**
**D-4150 Krefeld(DE)**

(54) **Silikonhaltige Polyamidmassen.**

(57) Die Erfindung betrifft thermoplastische Polyamidmassen mit verbesserten Eigenschaften, insbesondere verbesserter Verarbeitbarkeit und Eigenfarbe, aus (Co)Polyamiden, vorzugsweise teilkristallinen Copolyamiden, die relativ langkettige Polydiorganosiloxancarbonamid-Einheiten eingebaut enthalten, bei welchen die organofunktionellen Reste über Sauerstoff an die Siloxanreste gebunden sind, oder Polyamidmassen aus Mischungen von teilkristallinen Polyamiden mit diese Polydiorganosiloxancarbonamid-Einheiten enthaltenden amorphen oder teilkristallinen (Co)Polyamiden.

Gegenstand der Erfindung sind auch Verfahren zur Herstellung derartiger, Polydiorganosiloxancarbonamid-Einheiten enthaltender (Co)-Polyamide.

EP 0 269 833 A2

Xerox Copy Centre

87115535.4



BAYER AKTIENGESELLSCHAFT 5090 Leverkusen, Bayerwerk
Konzernverwaltung RP
Patentabteilung OER/by-c

## Silikonhaltige Polyamidmassen

Die Erfindung betrifft thermoplastische Polyamidmassen mit verbesserten Eigenschaften, insbesondere verbesserter Verarbeitbarkeit und Eigenfarbe, aus (Co)Polyamiden, vorzugsweise teilkristallinen Copolyamiden, die relativ langkettige Polydiorganosiloxancarbonamid-Einheiten eingebaut enthalten, bei welchen die organofunktionellen Reste über Sauerstoff an die Siloxanreste gebunden sind, oder Polyamidmassen aus Mischungen von teilkristallinen Polyamiden mit diese Polydiorganosiloxancarbonamid-Einheiten enthaltenden amorphen oder teilkristallinen (Co)Polyamiden.

Gegenstand der Erfindung sind auch Verfahren zur Herstellung derartiger, Polydiorganosiloxancarbonamid-Einheiten enthaltender (Co)-Polyamide.

Die Modifizierung von Polyamiden mit Polysiloxanen ist lange bekannt. So führt der Zusatz von Silikonölen zu Thermoplasten, unter anderem auch zu Polyamiden, zur

Verbesserung der Verarbeitbarkeit nach Art eines Fließmittels, siehe z.B. European Plastic News, July/August 1976, S. 32/33 oder die EP-A 583. Nachteilig ist jedoch die leichte Extrahierbarkeit der Öle sowie insbesondere eine schlechte Lackierbarkeit der Formmassen.

Co-Kondensate von Polyamiden mit bestimmten, organofunktionellen Polysiloxanen sind ebenfalls bekannt.

In US-A 4 346 200 wird die verbesserte Zugfestigkeit und Kerbschlagzähigkeit von Formmassen aus Polyamiden und elastomeren Blockcopolyamiden, deren Elastomersegmente auch Poly-($C_1$-$C_4$-dialkylen)-siloxane genannt werden, hervorgehoben.

Nach EP-A 0 054 426 und DE-A 2 120 961 lassen sich die Oberflächeneigenschaften und Verarbeitbarkeit von Polyamiden durch Einbau von Siloxansequenzen günstig beeinflussen.

Aromatische Polyamide, die mit Siloxanen modifiziert wurden, sind z.B. in US-A 3 392 143, JA 58 095 539 oder DE-A 1 770 399 beschrieben.

Allen diesen bekanten Cokondensaten gemeinsam ist die Verknüpfung der Polyamid- und Siloxansequenzen über einen organischen Rest R (Alkylen, Arylen, Aralkylen), der mit dem Siloxan durch eine direkte Si-C-Bindung verknüpft ist.

Diese Verfahren haben den Nachteil, daß die organofunktionellen Siloxane nur durch aufwendige und teure Verfahren (Hydrosilylierung in Gegenwart von Pt-Katalysatoren; photochemische Halogenierung von Methylchlorsilanen) zugänglich sind.

Die DE-A 35 45 905 beschreibt die Ester- oder Amid-Verknüpfung von Polyamid- und Siloxanblöcken mit einer maximalen $-[SiR_2O]_n$ Kettenlänge von n = 50 (gegebenenfalls sind mehrere dieser Blöcke über Sauerstoff und organische Reste zu längeren Einheiten verknüpft), zu Polymeren mit einem I-Wert von 10 bis 600, die u.a. zu verbesserter Festigkeit, Hydrolyse- und Chemikalienbeständigkeit in den Polymeren führen soll. Eine Verbesserung der Zähigkeit wird nicht beschrieben. Zur Erzielung einer hinreichenden Kompatibilität zwischen Siloxanblöcken und Polyamidblöcken sollen die wenig kompatiblen Siloxane des relativ höheren Molgewichts (bis n = 50) vorzugsweise mit solchen sehr niedrigen Molekulargewicht (z.B. n = 4) kombiniert werden.

Technisches Ziel der vorliegenden Anmeldung sind demgegenüber gut verarbeitbare, zähe Polysiloxan(Co)Polyamide, die aus billigen Rohstoffen gut zugänglich sind und trotzdem bei ihrer Verwendung als Polyamidmasse oder Polyamid-Zusatzkomponenten vorteilhafte Eigenschaften und ausreichende Hydrolysenbeständigkeit ergeben.

Überraschenderweise wurde nun gefunden, daß sich die Eigenfarbe und Verarbeitbarkeit von Polyamidformmassen

durch den Einbau von Polydiorganosiloxancarbonamid-Sequenzen dann verbessern läßt, wenn eine, relativ viele Siloxan-Reste besitzende Siloxankomponente über Si-O-C-Bindungen aufweisende funktionelle Gruppen mit dem Polyamid verknüpft ist. Überraschend weisen die Produkte eine hinreichende thermische und hydrolytische Stabilität auf. Der Zusatz der ausschließlich sehr langkettige Siloxanbausteine enthaltenden Copolyamide ergibt überraschend verträgliche Polyamide mit geringen Extraktwerten und relativ hohen Molekulargewichten ($\eta_{rel}$.-Werten). Auch ergeben die erfindungsgemäßen, thermoplastischen, siloxanhaltigen (Co)Polyamide in Mischungen mit Polyamiden plus Pfropfprodukten von Vinylmonomeren auf einer Kautschukgrundlage (entsprechend der eigenen Patentanmeldung P 36 37 677.9) besonders dann günstige Eigenschaften, wenn man sehr langkettige Polysiloxaneinheiten (n + m = 200 bis 300 im Optimum) verwendet. Die kurzkettigen Siloxanderivate (mit z.B. n = 4) wirken dagegen in etwa nur als Fließhilfsmittel (wie Siliconöle) und ermöglichen nicht die Reduzierung des Pfropfkautschuksgehaltes bei Erhalt vergleichbarer Tieftemperatur-Zähigkeiten, wie dies mit den erfindungsgemäßen Polydiorganosiloxancarbonamid-Einheiten erhältlichen Silicon-Polyamidmassen der Fall ist. Die erfindungsgemäßen, sehr langkettigen Siloxanverbindungen ergeben überraschend verträgliche Polyamide, ohne das man Mischungen mit nur wenigen Siloxanreste aufweisenden reaktiven Siloxanen mitverwenden muß, wie dies in der DE-A 25 45 905 beschrieben ist.

Gegenstand der Erfindung sind somit thermoplastische, siloxanhaltige (Co)Polyamide aus

A) einem Polydiorganosiloxancarbonamid-Einheiten der Formel (I) enthaltenden, teilkristallinen oder amorphen, thermoplastischen (Co)Polyamid

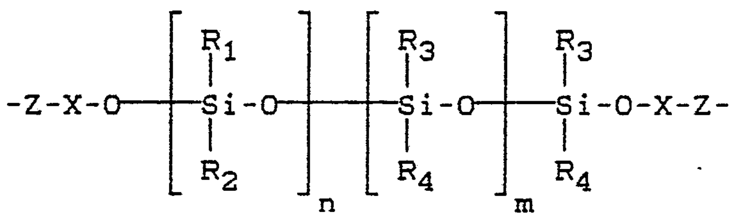

(I),

wobei

$R_1$, $R_2$, $R_3$ und $R_4$ unabhängig voneinander gleich oder verschieden und $C_1$-$C_{12}$-Alkyl, Alkenyl, Aryl, Aralkyl, halogeniertes Alkyl, Aryl oder Aralkyl sein können; bevorzugte Reste R sind Methyl, Phenyl und Vinyl, besonders bevorzugt ist Methyl;

X $C_1$-$C_{18}$-Alkylen-, Arylen- oder Aralkylen-Reste, bevorzugt $C_2$-$C_6$-Alkylen-Reste, ganz besonders bevorzugt Isopropylen-Reste sind;

Z 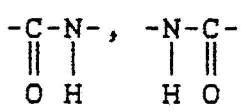 oder an X- gebunden 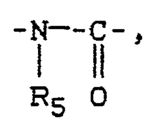

$R_5$ Alkyl, bevorzugt $C_1$-$C_6$-Alkyl oder $C_5$-$C_8$-Cycloalkyl, bevorzugt Cyclohexyl, bedeuten und

n und m gleich oder verschieden sein können, wobei die Summe aus n + m größer als 55 und kleiner als 1.000, vorzugsweise größer als 60 und kleiner als 600, besonders bevorzugt größer als 70 und kleiner als 500 sein soll,

und/oder

B) Mischungen aus

a) 99 bis 1 Gew.-% amorphen und/oder teilkristallinen, thermoplastischen Polyamiden und

b) 1 bis 99 Gew.-% eines Polydiorganosiloxancarbonamid-Einheiten enthaltenden, amorphen oder teilkristallinen Polyamids oder (Co)Polyamids A

wobei A) oder B) insgesamt 0,1 bis 40 Gew.-%, bevorzugt 0,5 bis 25 Gew.-%, besonders bevorzugt 1 bis 10 Gew.-%, an Polydiorganosiloxancarbonamid-Einheiten neben üblichen Polyamid-Einheiten enthält; Mischungen aus A) + B) gleichfalls die genannten Werte nicht übersteigen.

Bevorzugt für manche Polyamidmassen, insbesondere amorphe Polyamide oder solche mit höheren Anteilen an Siloxananteilen I (z.B. ≥10 Gew.-%, vorzugsweise ≥20 Gew.-%), sind (Co)Polyamide der gekennzeichneten Art, welche neben den Siloxaneinheiten der Formel (I) als übliche

Polyamid-Einheiten 0,1 bis 20 Gew.-% an Reste von mindestens zwei Oxyalkylengruppen aufweisenden Polyoxyalkylenetherdiaminen mit zwei (cyclo)aliphatisch gebundenen Aminogruppen eingebaut enthalten.

Die Polydiorganosiloxancarbonamid-Strukturen der Formel (I) enthaltenden Polyamide A) werden hergestellt, indem man bei den an sich bekannten Verfahren zur Herstellung von Polyamiden, z.B. Schmelzkondensation oder Phasengrenzflächenreaktion von Dicarbonsäuren bzw. deren Derivaten und Diaminen oder von Aminocarbonsäuren bzw. Lactamen, einen Teil der Dicarbonsäure(n)/-derivat(e) und/-oder des Diamins bzw. des Lactams oder der Aminocarbonsäure durch entsprechende, Amino- oder Carboxylendgruppen enthaltende, sogenannte organofunktionelle Polydiorganosiloxan-Verbindungen (II) mit Si-O-C-Bindungen ersetzt, deren organofunktioneller Rest (z.B. $-CH(CH_3)-CH_3-NH_2$ oder $-(CH_2)_4 \cdot NH_2$-Rest) mit seinem C-Atom über -O- an den Siloxan-Rest gebunden ist.

Werden Polyamide verwendet, die nach bekannten Verfahren aus Lactamen hergestellt werden, führt man die Polymerisation in Gegenwart eines aminoendgruppenhaltigen Polydiorganosiloxans (und gegebenenfalls der etwa äquimolaren Menge einer Dicarbonsäure) oder umgekehrt in Gegenwart eines Carboxyl(derivat)-endgruppenhaltigen Polydiorganosiloxans (und gegebenenfalls der etwa äquimolaren Menge eines Diamins) durch.

Es ist möglich, jedoch nicht bevorzugt, bei Caprolactam eine anionische Polymerisation vorzunehmen.

Bevorzugt werden für manche Polyamidmassen neben üblichen Polyamid-bildenden Komponenten 0,1 bis 20 Gew.-%, vorzugsweise 0,5 bis 5 Gew.-%, an mindestens zwei Oxyalkylengruppen aufweisenden Diaminen mit (cyclo)aliphatisch gebundenen Aminogruppen mitverwendet, insbesondere in solchen (Co)Polyamiden, welche auf Basis von Hexamethylendiamin und Adipinsäure und/oder amorphen Polyamiden, z.B. auf Basis Isophthalsäure, hergestellt werden.

Bei den vorstehend genannten, geeignete Endgruppen enthaltenden Polydiorganosiloxanen handelt es sich vorzugsweise um difunktionelle Produkte, wobei jedoch gegebenenfalls die Anwesenheit geringer Mengen monofunktioneller oder trifunktioneller Produkte in Kauf genommen werden kann.

Kennzeichnend für die Polyamidkomponente ist, daß zum Aufbau der Polyamide oder (Co)Polyamide organofunktionelle Polydiorganosiloxanverbindungen der allgemeinen Formel (II)

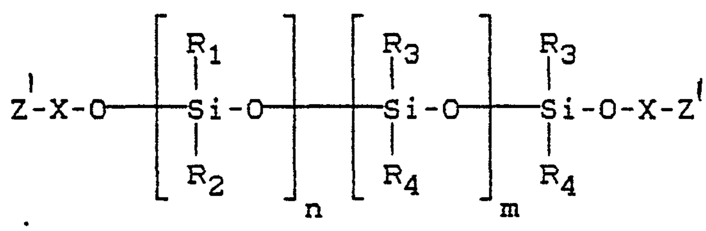

eingesetzt werden, wobei

$R^1$,$R^2$,$R^3$ und $R^4$ unabhängig voneinander gleich oder verschieden und $C_1$-$C_{12}$-Alkyl, Alkenyl, Aryl,

Aralkyl, halogeniertes Alkyl, Aryl oder Aralkyl sein können; bevorzugte Reste R sind Methyl, Phenyl und Vinyl, besonders bevorzugt ist Methyl;

X $C_1$-$C_{18}$-Alkylen-, $C_5$-$C_8$, $C_{11}$-$C_{12}$-Cycloalkylen Arylen- oder Aralkylen-Reste, bevorzugt $C_2$-$C_6$-Alkylen-Reste, ganz besonders bevorzugt Isopropylen-Reste sind,

Z' $NHR_5$ oder COOH bedeuten und

$R_5$ H oder Alkyl bzw. Cycloalkyl, bevorzugt H oder Cyclohexyl,

n und m gleich oder verschieden sein können, wobei die Summe aus n + m größer als 55 und kleiner als 1.000, vorzugsweise größer als 60 und kleiner als 600, besonders bevorzugt größer als 70 und kleiner als 500 sein soll.

Aminogruppen-haltige Polysiloxane der Formel (III)

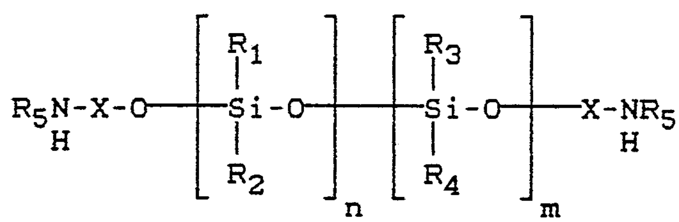

sind bekannt und stellen bekannte Verbindungen dar. Sie können z.B. durch Umsetzung eines Polysiloxans der Formel (IV)

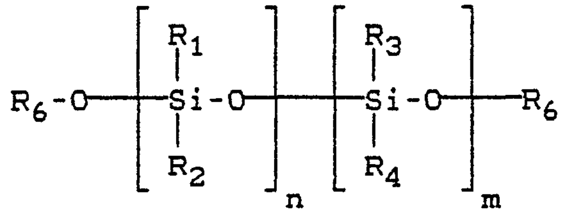

mit äquimolaren Mengen einer Hydroxyaminoverbindung HO-X-$NHR_5$, gegebenenfalls in Gegenwart eines Katalysators dargestellt werden (z.B. E. Larsson, Acta Chimica Scandinavica 8, 898 (1954)).

In den beiden letztangeführten Formeln haben

$R_1$ bis $R_4$ die oben angegebene Bedeutung;
$R_5$ ist H oder -Alkyl bevorzugt $C_1$-$C_6$-Alkyl); Cycloalkyl (bevorzugt Cyclohexyl); $R_6$ $C_1$-$C_4$-Alkyl oder -Aryl, vorzugsweise Methyl;
X, m und n haben die oben angegebene Bedeutung.

Als organofunktionelle, im wesentlichen linearen Polydiorganosiloxanverbindungen können beispielsweise folgende Verbindungen Verwendung finden: Die Verbindungen besitzen einerseits mehrfach wiederkehrende Struktureinheiten der Formel $-O-Si(R)_2-$, wobei in dieser Formel R für einen $C_1$-$C_4$-Alkyl oder einen Phenylrest jedoch vorzugsweise für einen Methylrest steht. Die endständigen funktionellen Amino- bzw. Carboxylgruppen sind dabei organofunktionell, dh. nicht direkt an Silicium gebunden, sondern über Kohlenstoff-haltige Reste mit der Siloxangruppe verknüpft. Die carbofunktionellen Endgruppen stellen vorzugsweise aliphatische oder cyclo-

aliphatische (gegebenenfalls Heteroatome wie insbesondere Sauerstoff enthaltende) Kohlenwasserstoffreste mit 1 bis 6 C-Atomen dar, die mindestens eine primäre, gegebenenfalls auch sekundäre Amin- oder (weniger bevorzugt) Carboxylgruppe aufweisen. Diorganofunktionelle (carbofunktionelle) Reste können beispielsweise in Form folgender Reste (über -O- an Si-Atome gebunden) vorliegen: $-CH_2-NH_2$, $-(CH_2)_4-NH_2$, $-CH_2-NH-C_4H_9$ oder $-CH_2NH-C_6H_{11}$.

Beansprucht wird auch ein Verfahren zur Herstellung der Polydiorganosiloxancarbonamid-Einheiten enthaltenden (Co)polyamide. Hierzu werden die Carboxyl- oder (bevorzugt) aminoterminierten, organofunktionellen Polydiorganosiloxan-Verbindungen in Gegenwart von etwa äquimolarer, Mengen einer Dicarbonsäure (und bei der Herstellung von (Co)Polyamiden) mit Salzen von Dicarbonsäuren und Diaminen, Aminocarbonsäuren oder Lactamen, zu Polysiloxan-haltigen Polyamiden kondensiert. Überraschenderweise erweist sich hier die Si-O-X-Bindung als für dieses System hinreichend hydrolysestabil, obwohl man sonst derartige Silikon-Derivate wegen ihrer leichten Hydrolisierbarkeit als wenig- oder ungeeignet ansieht.

Geeignete übliche polyamidbildende Dicarbonsäuren bzw. Diamine bzw. Laktame sind solche, die üblicherweise zur Darstellung von teilkristallinen oder amorphen Polyamiden verwendet werden, wie z.B. $C_2$-$C_{10}$-$\alpha,\omega$-Dicarbonsäuren, Phthalsäure, Terephthalsäure, Isophthalsäure, Cyclohexandicarbonsäuren, 2,2,4/2,4,4-Trimethyladipinsäuren $C_2$-$C_{10}$-$\alpha,\omega$-Diamine, m- oder p-Xylylendiamin, 2,2,4- und/oder 2,4,4-Trimethylhexamethylen-

diamin, Isophorondiamin oder andere übliche, zur Herstellung von Polyamiden verwendete Dicarbonsäuren oder Diamine der Gemische aus mehreren Komponenten. Neben diesen beispielhaft aufgezählten sind alle polyamidbildenden, bekannten Komponenten des Standes der Technik prinzipiell geeignet.

Alternativ wird das endgruppenhaltige, die reaktiven Gruppen an organische Reste gebundene (organofunktionelle Polydiorganosiloxan-III) vorteilhaft in Gegenwart äquimolarer Mengen Dicarbonsäuren bzw. Diamine (je nach Art der Endgruppen in der Siloxanverbindung) mit einem Lactam mit 6 bis 12 C-Atomen kondensiert. Die Darstellung der Siloxangruppen-haltigen Polyamide kann auch durch Lösungskondensation bzw. im Falle von Lactamen auch durch anionische Polymerisation in Gegenwart üblicher Katalysatoren durchgeführt werden.

Zur Herstellung von polydiorganosiloxanhaltigen (Co)-Polyamiden insbesondere solchen mit hohen Gehalten ($>$10 Gew.-%, vorzugsweise $\geq$15 Gew.-%) an Siloxansegmenten, kann die Herstellung vorteilhaft in Gegenwart kleiner Mengen (z.B. 0,1 bis 20 Gew.-%, bevorzugt $\leq$10 Gew.-%, besonders bevorzugt $\leq$5 Gew.-%, z.B. 0,5 bis 5 Gew.-%, bezogen auf das (Co)Polyamid, eines Polyetherdiamins mit mindestens zwei Oxyalkylengruppen und zwei (cyclo)aliphatisch gebundenen Aminogruppen mit Molekulargewichten $\geq$148, insbesondere $\geq$400 durchgeführt werden. Geeignete Polyetherdiamine sind z.B. 1,11-Diamino-3,6,9-trioxa-undecan, 1,8-Diamino-3,6-dioxo-octan, insbesondere aber Polyoxyalkyleneetherdiamine wie z.B.

Oxyethylen-, Oxypropylen- oder Oxytetramethylen-Polyetherdiamine mit Molekulargewichten von vorzugsweise 400 bis 3500. Diese Polyoxyalkylenetherdiamine können beispielsweise durch Druckaminierung von Polyoxyalkylenetherdiolen, durch Addition von Acrylnitril an Polyetherdiole und anschließende Reduktion der Nitrilgruppe, durch alkalisch katalysierte Verseifung von NCO-Prepolymeren aus Polyetherdiolen und (cyclo)-aliphatischen Diisocyanaten oder nach anderen, bekannten Methoden hergestellt werden. Beispiele für gut erfindungsgemäß einsetzbare Polyetherdiamine sind die Jeffamine®, welche handelsüblich sind (Fa. Texaco-USA).

Der Zusatz von Polyetherdiaminen ist sowohl bei der Herstellung von Polyamiden aus Lactamen (z.B. Nylon-6) als auch insbesondere aus Salzen aus Dicarbonsäsuren und Diaminen, z.B. Nylon-66; -6,10 oder anderen, wirksam und kann ganz besonders effektiv zur Darstellung von amorphen, insbesondere höhere Anteile an Polydiorganosiloxancarbonamid-Einheiten enthaltenden (Co)Polyamiden, z.B. auf Basis von Isophthalsäure und Hexamethylendiamin und gegebenenfalls ternären Co-Komponenten, verwendet werden.

Durch die zusätzliche Einkondensation des Polyetherdiamins werden (Co)Polyamidformmassen erhalten, bei denen eine hervorragende Verträglichkeit zwischen den Polysiloxan- und Polyamidsequenzen besteht, bei denen der Polydiorganosiloxan-extrahierbare Anteil - selbst bei Verwendung guter Solventien für die Polydiorganosiloxane - deutlich geringer ist als ohne Polyetheramin-Einbau. Außerdem sind diese (Co)Polyamide homogen.

Die Polydiorganosiloxan-Einheiten können mit sich selbst oder mit den Polyamid-bildenden Komponenten (einschließlich der genannten Polyetherdiamine) über die Carbonamidgruppen verknüpft sein. Charakteristisch bei der Verwendung der organofunktionellen Polydiorganosiloxan-Komponenten ist, daß nach der Einbaureaktion nur ein sehr kleiner Teil mit einem für das Ausgangssiloxan guten Lösungsmittel aus dem Polyamid extrahierbar ist.

Als Polyamid-Komponente Ba) der erfindungsgemäßen Formmassen eignen sich alle teilkristallinen Polyamide, insbesondere Polyamid-6, Polyamid-6,6 und teilkristalline (Co)Polyamide auf Basis dieser beiden Komponenten. Weiterhin kommen teilkristalline Polyamide in Betracht, deren Säurekomponente, insbesondere ganz oder teilweise (neben Adipinsäure bzw. Caprolactam) aus Terephthalsäure und/oder Isophthalsäure und/oder Korksäure und/oder Sebacinsäure und/oder Azelainsäsure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin bestehen und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide Ba) sind Polyamid-6 und Polyamid-6,6 oder (Co)Polyamide mit nur geringen Anteilen (bis etwa 10 Gew.-%) der Cokomponenten.

Die genannten, polyamidbildenden Komponenten können auch zur Herstellung der Polydiorganosiloxan-Einheiten enthaltenden (Co)Polyamide A eingesetzt werden, wobei - wie bereits ausgeführt - Amino- und/oder Carboxyl-organofunktionelle, im wesentlichen lineare Polydiorganosiloxane (vorzugsweise Siloxanverbindungen auf Basis Polydimethylsiloxanen) eingesetzt werden.

Man kann amorphe, oder bevorzugt teilkristalline, thermoplastische Polyamide A mit den Polydiorganosiloxancarbonamid-Einheiten gleich so aufbauen, daß die für die Komponente A) geforderte Menge an diesen Einheiten mit eingebaut wird ((Co)Polyamide vom Typ A).

Vorzugsweise jedoch werden Polydiorganosiloxancarbonamid-Einheiten enthaltende Polyamide oder (Co)Polyamide mit einem ausschließlichen Gehalt oder (bevorzugt) einem höheren Gehalt (bis etwa 90 Gew.-% bevorzugt bis 65 Gew.-%) an diesen Siloxaneinheiten ((Co)Polyamide), als für Komponente A gefordert, aufgebaut und dann in geeigneten Mengen mit (siloxanfreien) teilkristallinen der amorphen thermoplastischen Polyamiden Bb) in entsprechenden Mengen vermischt, um die erfindungsgemäßen Massen mit dem geforderten Gehalt an organofunktionell gebundenen Polydiorganosiloxancarbonamid-Einheiten zu erhalten.

Der Gehalt an Polydiorganosiloxancarbonamid-Einheiten III in den beanspruchten Massen ist nach oben hin im wesentlichen durch zu hohen Steifigkeitsverlust (evtl. Übergang zu elastomeren Eigenschaften) begrenzt, der die Verwendung der Polyamid-Formmassen für die beabsichtigten Anwendungen ausschließt.

Die Polyamide der Komponente A) sollen vorzugsweise eine relative Viskosität (gemessen an einer 1 Gew.-%igen Lösung in m-Kresol bei 25°C) von 2,0 bis 5,0, besonders bevorzugt von 2,5 bis 4,0 aufweisen.

Die erfindungsgemäßen Polyamidformmassen können übliche Additive in üblichen Mengen, wie Gleit- und Entformungsmittel, Nukleierungsmittel, Stabilisatoren, Füll- und Verstärkungsstoffe, Flammschutzmittel sowie deren Synergisten, sowie farbgebende Stoffe enthalten.

Die Herstellung der Formmassen kann in üblichen Mischaggregaten, wie Walzen, Knetern, Ein- und Mehrwellenextrudern, erfolgen.

So können die erfindungsgemäßen Formmassen auf den genannten Mischaggregaten hergestellt werden, indem die Komponenten Ba) und Bb) gemeinsam ausgeschmolzen und homogenisiert werden.

Die Temperatur bei der Herstellung der Mischungen sollte mindestens 10°C und zweckmäßig höchstens 80°C oberhalb des Schmelzpunktes des höherschmelzenden Polyamids liegen.

Die erfindungsgemäßen Formmassen können überall in Spritzguß- und Extrusionssektor Anwendung finden, wie z.B. für Haushaltsgeräte etc.. Sie finden jedoch auch als Modifizierungskomponente für Polyamidmischungen Anwendung, wie sie in der gleichzeitig mit der Prioritätsanmeldung P 36 37 676.0 eingereichten deutschen Patentanmeldung der Anmelderin P 36 37 677.9 (Le A 24 748) beschrieben wird.

Patentbeispiele

Die in den Beispielen erfindungsgemäß verwendeten aminoendgruppenhaltigen Polysiloxane mit unterschiedlicher Länge der $[Si(CH_3)_2-O]_n$-Einheiten

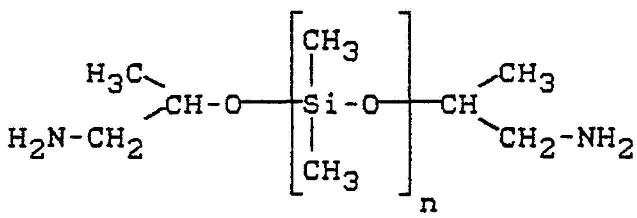

(V)

(n = 99, 213, 482, 552) wurden aus Octamethylcyclotetrasiloxan, Isopropanolamin und KOH nach bekannten Methoden (E. Larson, Acta Chimica Scandinavica 8, 898 (1954) hergestellt, ebenso das Vergleichsprodukt (V), n = 40.

Beispiel 1

102,4 g Caprolactam, 13,05 g ε-Aminocapronsäure und 12,5 g (10 Gew.-%) Bis-(isopropylamino)siloxan (V), n = 99 werden mit 0,425 g Adipinsäure in einer Kondensationsapparatur unter Stickstoff 1 h bei 220° C und 6 h bei 270° C erhitzt.

Beispiel 2

Wurde analog zu Beispiel 1 mit Bis-(isopropylamino)-siloxan (V), n = 213 und 0,115 g Adipinsäure durchgeführt.

Beispiel 3

Wurde analog zu Beispiel 1 mit Bis-(isopropylamino)-siloxan (V), n = 482 und 0,05 g Adipinsäure durchgeführt.

Beispiel 4 (anionische Lactam-Polymerisation)-Vergleich-

80 g Caprolactam und 10 g Bis-(isopropylamino)siloxan (V), n = 40, werden 15 min. auf 200° C erhitzt, dann 10 g Na-Lactamat (18 %ig in Caprolactam) hinzugegeben und 10 min bei 200° C gerührt. Dann wurden 9 ml Hexamethylendiisocyanat zugegeben. Nach 5 min war der Ansatz durchpolymerisiert.

Beispiel 5

208,7 g AH-Salz, 20 g Bis-(isopropylamino)siloxan (V), n = 99, und 0,39 g Adipinsäure werden in einer Kondensationsapparatur unter Stickstoff 15 min auf 240° C, dann 5 h auf 280° C erhitzt.

Beispiel 6 (Vergleich mit kurzkettigen Siloxanresten)

Wurde analog zu Beispiel 1 mit 88,15 g Caprolactam, 13,5 g ε-Aminocapronsäure, 25 g Bis-(isopropyl-aminosiloxan (V), n = 40, und 1,24 g Adipinsäure durchgeführt.

Beispiel 7 (Vergleich)

Wurde analog zu Beispiel 6 unter zusätzlicher Verwendung von 4,37 g Jeffamin®D400 und 1,53 g Adipinsäure durchgeführt.

Beispiel 8

74,67 g Isophthalsäure/Hexandiamin-1,6-Salz (IH-Salz), 9,82 g Bis-(4-Aminocyclohexyl)-methan, 7,76 g Isophthalsäure, 0,61 g Hexamethylendiamin und 10,46 g Bis-isopropyl(amino)siloxan (V), n = 552, werden in einer Kondensationsapparatur unter Stickstoff 1 h auf 240° C und anschließend 4 h bei 270° C erhitzt.

Beispiel 9

Wurde analag zu Beispiel 8 mit 70,67 g IH-Salz, 9,61 g Bis-(4-Aminocyclohexyl)-methan, 9,00 g Isophthalsäure, 0,65 g Hexamethylendiamin und 10.46 g Bis-(isopropylamino)siloxan (V), n = 552, in Gegenwart von 3,68 g Jeffamin D 400® durchgeführt. Es werden homogene, gut (mit dem Siloxanrest) verträgliche Polyamide erhalten.

Die erhaltenen Siloxan-Co-polyamide wurden zerkleinert, mit Methylenchlorid und (im Falle von Polyamid 6) zusätzlich mit Wasser extrahiert und die relativen Viskositäten wurden an einer 1 gew.-%igen Lösung in m-Kresol bestimmt. Einige Kenndaten enthält Tabelle 1.

Tabelle 1

| Beispiel | Siloxan (V) ( n = ) | Wasser-Extrakt (i.W. Caprolactam) | Methylenchlorid Extrakt (i.W. Siloxan | relative Viskosität (1 Gew.-% in m-Kresol bei 25° C) (nach Extraktion mit Wasser und Methylenchlorid |
|---|---|---|---|---|
| 1 | 99 | 11,3 | 1,65 | 3,19 |
| 2 | 213 | 10,5 | 1,90 | 3,06 |
| 3 | 482 | 11,2 | 1,10 | 3,38 |
| 4 | (anionische Polymerisation) | | | |
| 5 | 99 | - | 2,05 | 2,46 |
| 6 (Vergleich) | 40 | 8,4 | 3,05 | 2,00 |
| 7 (Vergleich) | 40 | 7,6 | 1,39 | 2,10 |
| 8 | 552 | - | 4,90 | 2,30 |
| 9 | 552 | - | 0,80 | 2,93 |

Patentansprüche

1. Thermoplastische Poly-diorganosiloxancarbonamid-Einheiten (I) enthaltende (Co)Polyamid-massen aus im wesentlichen

A) einem Polydiorganosiloxancarbonamid-Einheiten der Formel (I) enthaltenden, teilkristallinen oder amorphen thermoplastischen (Co)Polyamid

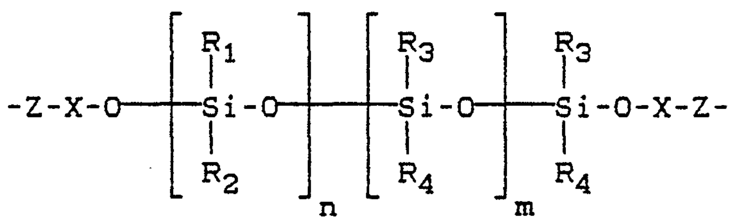
(I),

wobei

$R^1$,$R^2$,$R^3$ und $R^4$ unabhängig voneinander gleich oder verschieden und $C_1$-$C_{12}$-Alkyl, Alkenyl, Aryl, Aralkyl, halogeniertes Alkyl, Aryl oder Aralkyl sein können; bevorzugte Reste R sind Methyl, Phenyl und Vinyl, besonders bevorzugt ist Methyl;

X $C_1$-$C_{18}$-Alkylen-, Cycloalkylen, Arylen- oder Aralkylen-Reste, bevorzugt $C_2$-$C_6$-Alkylen-Reste, ganz besonders bevorzugt Isopropylen-Reste sind

Z 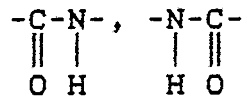 oder an X gebunden 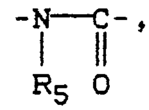

$R_5$ Alkyl, bevorzugt $C_1$-$C_6$-Alkyl oder $C_5$-$C_8$-, $C_{11}$-$C_{12}$-Cycloalkyl, vorzugsweise Cyclohexyl bedeuten und

n und m gleich oder verschieden sein können, wobei die Summe aus n + m größer als 55 und kleiner als 1.000, vorzugsweise größer als 60 und kleiner als 600, besonders bevorzugt größer als 70 und kleiner als 500 sein soll,

und/oder

B) Mischungen aus

a) 99 bis 1 Gew.-% teilkristallinen, thermoplastischen Polyamiden und

b) 1 bis 99 Gew.-% eines Polydiorganosiloxancarbonamid-Einheiten enthaltenden teilkristallinen oder amorphen (Co)Polyamids, (Co)Polyamids A

wobei A) oder B) insgesamt 0,1 bis 40 Gew.-%, bevorzugt 0,5 bis 25 Gew.-%, besonders bevorzugt 1 bis 10 Gew.-%, an Polydiorganosiloxancarbonamid-Einheiten (I) enthält.

2. Polydiorganosiloxancarbonamid-Einheiten enthaltende (Co)Polyamidmassen nach Anspruch 1, dadurch gekennzeichnet, daß das Polyamid neben den Siloxan-Ein-

heiten (I) als übliche Polyamid-Einheiten 0,1 bis 20 Gew.-% Reste von mindestens zwei Oxyalkylengruppen aufweisenden Polyetherdiaminen mit zwei (cyclo)aliphatisch gebundenen Aminogruppen eingebaut enthält.

3. Verfahren zur Herstellung von Polydiorganosiloxancarbonamid-Einheiten (I) enthaltenden (Co)Polyamiden entsprechend Ansprüchen 1 und 2, durch Umsetzung der Amino- und/oder Carboxyl-terminierten, organofunktionellen Polydiorganosiloxan-Verbindungen (II)

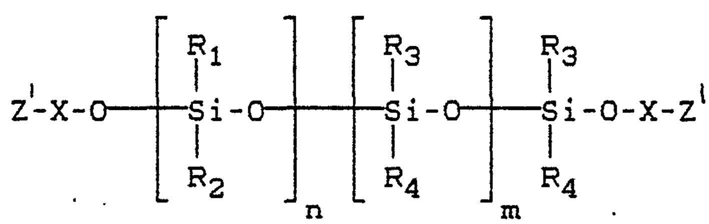

wobei

$R^1$, $R^2$, $R^3$ und $R^4$ unabhängig voneinander gleich oder verschieden und $C_1$-$C_{12}$-Alkyl, Alkenyl, Aryl, Aralkyl, halogeniertes Alkyl, Aryl oder Aralkyl sein können; bevorzugte Reste R sind Methyl, Phenyl und Vinyl, besonders bevorzugt ist Methyl;

X $C_1$-$C_{18}$-Alkylen-, Arylen- oder Aralkylen-Reste, bevorzugt $C_2$-$C_6$-Alkylen-Reste, ganz besonders bevorzugt Isopropylen-Reste sind,

Z'. $-NH_2$, $-NHR_5$ oder -COOH

$R_5$ Alkyl, vorzugsweise $C_1$-$C_6$-Alkyl oder $C_5$-$C_8$, $C_{11}$-$C_{12}$-Cycloalkyl, vorzugsweise Cyclohexyl bedeuten und

n und m gleich oder verschieden sein können, wobei die Summe aus n + m größer als 55 und kleiner als 1.000, vorzugsweise größer als 60 und kleiner als 600, besonders bevorzugt größer als 70 und kleiner als 500 sein soll,

in Gegenwart von etwa äquimolaren Mengen einer Dicarbonsäure oder eines Diamins, mit Salzen von Dicarbonsäuren und Diaminen und/oder Aminocarbonsäuren und/oder Lactamen, unter polyamidbildenden Bedingungen und gegebenenfalls ansschließende Vermischung mit teilkristallinen, thermoplastischen Polymamiden Ba).

4. Verfahren nach Anspruch 3, dadurch gekennzeichnet, daß Amino-terminierte Verbindungen der Formel (III)

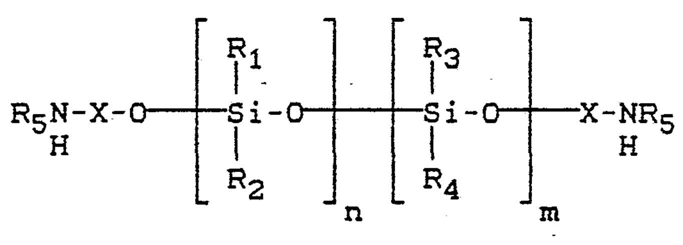

,

wobei

$R_1$ bis $R_4$, X, m und n die oben angegebene Bedeutung hat,

$R_5$ Wasserstoff oder $C_1$-$C_6$-Alkyl oder $C_5$-$C_8$, $C_1$1-$C_{12}$-Cycloalkyl, in Formel III),

$R_6$ $C_1$-$C_4$-Alkyl oder Aryl; vorzugsweise Methyl ist,

eingesetzt werden.

5. Verfahren nach Ansprüchen 3 und 4, dadurch gekennzeichnet, daß 0,1 bis 20 Gew.-%, insbesondere 0,5 bis 5 Gew.-%, an mindestens zwei Oxyalkylengruppen aufweisenden Polyetherdiaminen mit zwei (cyclo)aliphatisch gebundenen, primären Aminogruppen als übliche, polyamidbildende Diaminkomponente bei der Umsetzung zum (Co)Polyamid mitverwendet werden.

6. Verfahren nach Anspruch 5, dadurch gekennzeichnet, daß man als übliche polyamidbildende Komponenten Hexamethylendiamin und Adipinsäure, Sebacinsäure oder Isophthalsäure einsetzt.